(19) Europäisches Patentamt
European Patent Office
Office européen des brevets

(11) EP 3 392 302 A1

(12) # EUROPEAN PATENT APPLICATION
published in accordance with Art. 153(4) EPC

(43) Date of publication:
**24.10.2018 Bulletin 2018/43**

(21) Application number: **16875236.8**

(22) Date of filing: **19.10.2016**

(51) Int Cl.:
***C08L 7/00*** *(2006.01)* ***C08L 9/00*** *(2006.01)*
***C08K 3/06*** *(2006.01)* ***C08K 3/22*** *(2006.01)*
***C08K 5/3415*** *(2006.01)* ***F16F 15/08*** *(2006.01)*

(86) International application number:
**PCT/JP2016/080954**

(87) International publication number:
**WO 2017/104251 (22.06.2017 Gazette 2017/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **16.12.2015 JP 2015245114**

(71) Applicant: **Toyo Tire & Rubber Co., Ltd.**
**Hyogo 664-0847 (JP)**

(72) Inventor: **OISHI, Akira**
**Hyogo 6640847 (JP)**

(74) Representative: **Cabinet Beau de Loménie**
**158, rue de l'Université**
**75340 Paris Cedex 07 (FR)**

(54) **RUBBER COMPOSITION FOR VIBRATION-DAMPING RUBBER**

(57) A rubber composition for vibration-damping rubber contains a rubber component comprising at least one or more diene-based rubbers, a complex zinc flower, and a bismaleimide compound. The rubber composition for vibration-damping rubber preferably contains 2 to 40 parts by weight of the complex zinc flower, and 0.5 to 5 parts by weight of the bismaleimide compound for 100 parts by weight of the rubber component.

EP 3 392 302 A1

## Description

TECHNICAL FIELD

The present invention relates to a rubber composition for vibration-damping rubber, particularly, a rubber composition for vibration-damping rubber that is favorably usable for a vibration-damping member, such as an engine mount for an automobile; and a vibration-damping rubber, using this rubber composition.

BACKGROUND ART

Hitherto, as vibration-damping rubbers, rubbers have been used in which carbon black as a reinforcing material is blended into natural rubber. In the market in recent years, vibration-damping rubbers, particularly, vibration-damping rubbers for automobiles are required to be decreased in dynamic magnification ("dynamic spring constant"/"static spring constant" ratio).

In order to decrease vibration-damping rubbers in dynamic magnification, it is important to heighten the dispersibility of carbon black in natural rubber. Hitherto, a method has been adopted in which as carbon black, a large particle diameter species thereof is used, thereby heightening the dispersibility of carbon black in natural rubber. However, this method tends to damage the endurance of vibration-damping rubbers.

Apart from the above, in a rubber composition, a vulcanization promoter is generally used together with a vulcanizer containing sulfur in order to shorten a period for the vulcanization thereof, lower the vulcanization temperature, and decrease the amount of the vulcanizer. One substance for activating this vulcanization promoter and making the promoting effect thereof higher is a metal oxide, a typical example of which is zinc oxide (zinc flower). Patent Document 1 listed below states that a vibration-damping rubber decreased in dynamic magnification can be yielded by blending a specified amount of zinc flower made into fine particles for 100 parts by weight of natural rubber, and further vulcanizing the resultant rubber composition. However, the present inventors have made eager investigations to find out that from the viewpoint of a decrease of vibration-damping rubbers in dynamic magnification, there remains a room for a further improvement of the technique described in this patent document.

Moreover, in some cases, vibration-damping rubbers used, particularly, in automobiles are intensely required to be improved in heat resistance together with the decrease in the dynamic magnification thereof. Patent Document 2 listed below discloses a technique for decreasing a vibration-damping rubber in dynamic magnification by blending 3 to 50 parts by weight of complex zinc flower into 100 parts by weight of a diene-based rubber component in a rubber composition. However, the present inventors have made eager investigations to find out that from the viewpoint of an improvement of vibration-damping rubbers in heat resistance, there remains a room for a further improvement.

PRIOR ART DOCUMENTS

Patent Documents

Patent Document 1: JP-A-2006-193621

Patent Document 2: JP-A-2014-77050

SUMMARY OF INVENTION

PROBLEMS TO BE SOLVED BY THE INVENTION

In the light of the above-mentioned situation, the present invention has been made, and an object thereof is to provide a rubber composition for vibration-damping rubber which can be made compatible between a decrease in dynamic magnification and an improvement in heat resistance.

MEANS FOR SOLVING THE PROBLEMS

In order to solve the above-mentioned problems, the inventors have made eager investigations about combinations of a metal oxide with a bismaleimide compound. As a result, the inventors have found out that in the case of using, as a raw material, a rubber composition in which a combination of a complex zinc flower with a bismaleimide compound is blended into a diene-based rubber, a vibration-damping rubber can be obtained which is remarkably

decreased in dynamic magnification and is excellent in heat resistance. The present invention has been made as a result of the investigations, and attains the object by the following:

The rubber composition for vibration-damping rubber according to the present invention comprises a rubber component comprising at least one or more diene-based rubbers, a complex zinc flower, and a bismaleimide compound. In the rubber composition for vibration-damping rubber according to the invention, a combination of a complex zinc flower with a bismaleimide compound is blended into a diene-based rubber. This blending decreases remarkably a vibration-damping rubber produced by use of this blend as a raw material in dynamic magnification, and improves this rubber particularly in heat resistance. In order that the produced vibration-damping rubber can attain the decrease in dynamic magnification and the improvement in heat resistance with a better balance, the rubber composition preferably comprises 2 to 40 parts by weight of the complex zinc flower, and 0.5 to 5 parts by weight of the bismaleimide compound for 100 parts by weight of the rubber component.

The rubber composition for vibration-damping rubber preferably further comprises sulfur, and more preferably comprises 0.05 to 1 part by weight of sulfur for 100 parts by weight of the rubber component. In the case of blending the combination of the complex zinc flower, the bismaleimide compound and sulfur into the diene-based rubber, and adjusting, particularly, the blend ratio between these three into the specified ratio, the produced vibration-damping rubber can attain the decrease in dynamic magnification and the improvement in heat resistance with an especially good balance.

MODE FOR CARRYING OUT THE INVENTION

The rubber composition for vibration-damping rubber according to the present invention includes a rubber component comprising at least one or more diene-based rubbers, a complex zinc flower, and a bismaleimide compound.

The rubber composition for vibration-damping rubber according to the present invention includes, as a rubber component thereof, at least one diene-based rubber, preferably as a main ingredient. In the present invention, the wording "main ingredient" means that the rubber composition includes, as the rubber component, 50 parts or more by weight of the diene-based rubber. The composition includes, as the rubber component, preferably 80 parts or more, more preferably 95 parts by weight of the diene-based rubber. The diene-based rubber is, for example, natural rubber (NR); or a synthetic rubber. Examples of the latter include isoprene rubber (IR), butadiene rubber (BR), styrene butadiene rubber (SBR), butyl rubber (IIR), acrylonitrile butadiene rubber(NBR) and other diene-based rubbers; brominated butyl rubber (BR-IIR), and other halogenated butyl rubbers; and polyurethane rubber, acrylic rubber, fluorine-contained rubber, silicone rubber, chlorosulfonated polyethylene, and other synthetic rubbers.

The rubber composition for vibration-damping rubber according to the present invention includes a complex zinc flower. The composition includes this substance in an amount preferably from 2 to 40 parts by weight, more preferably from 3 to 30 parts by weight for 100 parts by weight of the rubber component. The complex zinc flower has a structure having, for example, $CaCO_3$, $Ca(OH)_2$, $CaSO_4$, ZnO, MgO, $Mg(OH)_2$ or $MgCO_3$ for a core as a carrier into the rubber, and a zinc flower with which the core is covered. This zinc flower is a zinc flower higher in activity than ordinary zinc flowers. The following ratio and other factors can be set at will: a ratio between the size of the core and the thickness of the cover layer of zinc flower. This complex zinc flower may be preferably a commercially available product, examples thereof include products of META-Z L series (META-Zs L40, L50 and L60).

The rubber composition for vibration-damping rubber according to the present invention includes a bismaleimide compound together with the complex zinc flower. The bismaleimide compound is in particular preferably a bismaleimide compound represented by the following general formula (1):

[Formula 1]

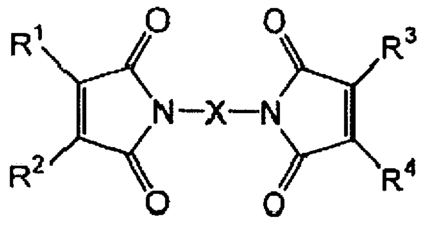

(1)

wherein $R^1$ to $R^4$ each represent a hydrogen atom, or an alkyl, amino, nitro or nitroso group, and may be the same or different from each other; and X represents a bivalent organic group. Specific examples of the bismaleimide compound usable in the present invention include N,N'-M-phenylenebismaleimide, N,N'-(4,4'-diphenylmethane)bismaleimide, bis(3-ethyl-5-methyl-4-maleimidephenyl)methane, and 2,2'-bis(4-(4-maleimidephenoxy)phenyl)propane. In the rubber composition for vibration-damping rubber, the content of the bismaleimide compound blended together with the complex

zinc flower is preferably from 0.5 to 5 parts by weight, more preferably from 0.6 to 4 parts by weight for 100 parts by weight of the rubber component.

The rubber composition for vibration-damping rubber according to the present invention preferably includes a sulfur-containing vulcanizer. The sulfur as this sulfur-containing vulcanizer is sufficient to be a sulfur for ordinary rubbers, and may be, for example, powdery sulfur, precipitated sulfur, insoluble sulfur, or highly dispersible sulfur. In the rubber composition for vibration-damping rubber according to the present invention, the sulfur content is preferably from 0.5 to 3 parts by weight for 100 parts by weight of the rubber component. Considering the heat resistance of a vibration-damping rubber to be produced, the sulfur content is in particular preferably from 0.05 to 1 part by weight.

As far as the advantageous effects of the present invention are not damaged, any blending agent used ordinarily in the rubbery industry may be appropriately used and blended, together with the above-mentioned rubber component, complex zinc flower, bismaleimide compound and sulfur-containing vulcanizer, into the rubber composition of the invention for vibration-damping rubber. Examples of the blending agent include a vulcanization promoter, carbon black, silica, a silane coupling agent, stearic acid, a vulcanization promotion aid, a vulcanization retardant, an antiaging agent, softening agents such as a wax and an oil, and a working aid.

The species of carbon black may be, for example, SAF, ISAF, HAF, FEF or GPF. Carbon black is usable as far as carbon black can adjust rubber properties of the vulcanized rubber, such as the hardness, reinforcing performance, and low exothermic property of the rubber. The blend amount of carbon black is preferably from 20 to 120 parts by weight, more preferably from 30 to 100 parts by weight, even more preferably from 30 to 60 parts by weight for 100 parts by weight of the rubber component. If this blend amount is less than 20 parts by weight, the rubber composition cannot sufficiently gain the reinforcing effect of carbon black. If the amount is more than 120 parts by weight, the rubber composition is deteriorated in exothermic property, miscibility into rubber, operability when worked, and others.

The vulcanization promoter may be a vulcanization promoter used usually for rubber vulcanization. Examples thereof include sulfenamide type, thiuram type, thiazole type, thiourea type, guanidine type, and dithiocarbamic acid salt type vulcanization promoters. Such promoters may be used singly or in an appropriate mixture form.

The antiaging agent may be an antiaging agent used usually for rubber. Examples thereof include aromatic amine type, amine-ketone type, monophenolic type, bisphenolic type, polyphenolic type, dithiocarbamic acid salt type, and thiourea type antiaging agents. Such agents may be used singly or in an appropriate mixture form.

The rubber composition of the present invention for vibration-damping rubber can be obtained by kneading the above-mentioned rubber component, complex zinc flower, bismaleimide compound and sulfur-containing vulcanizer, and optional components, which are, for example, carbon black, stearic acid, silica, a vulcanization promoter, an antiaging agent, and wax, using a kneading machine used in an ordinary rubber industry, such as a Banbury mixer, a kneader, or a roller.

The method for blending the individual components with each other is not particularly limited, and may be, for example, any one of the following: a method of kneading, in advance, kneading components other than the sulfur-containing vulcanizer, the vulcanization promoter and other vulcanization-related components to prepare a masterbatch, adding the remaining components thereto, and further kneading the resultant; a method of adding the individual components in any order to a machine as described above, and then kneading the resultant; and a method of adding all the components simultaneously to the same machine, and kneading the resultant.

After the individual components are kneaded and then the resultant is worked and shaped, the shaped body is vulcanized. In this way, a vibration-damping rubber low in dynamic magnification can be produced. This vibration-damping rubber is usable suitably for vibration-damping rubbers for automobiles, for example, for their engine mounts, torsional dampers, body mounts, member mounts, strut mounts and muffler mounts, and suitably for vibration-damping rubbers for railway vehicles, and vibration-damping rubbers for industrial machines. The vibration-damping rubber is particularly useful for engine mounts and other constituent members of vibration-damping rubbers for automobiles, for which a low dynamic magnification and heat resistance are required.

## EXAMPLES

Hereinafter, this invention will be more specifically described by demonstrating working examples thereof.

(Preparation of Each Rubber Composition)

In accordance with a blending formulation in Table 1, a rubber composition in each of Examples 1 to 13, and Comparative Examples 1 and 2 was blended into 100 parts by weight of one or more rubber components. An ordinary Banbury mixer was used to knead the blend to prepare a rubber composition. Individual blending agents described in Table 1 are as follows:

a) Rubber components

Natural rubber (NR): "RSS#3"
Isoprene rubber (IR): "IR2200" (manufactured by JSR Corp.)
Butadiene rubber (BR) : "BR01" (manufactured by JSR Corp.)
Styrene-butadiene rubber (SBR): "Nipol NS116R" (manufactured by Zeon Corp.)

b) Complex zinc flower: "META-Z L60" (manufactured by Inoue Calcium Corp.)
Zinc oxide: "No. 3 ZnO" (manufactured by Mitsui Mining & Smelting Co., Ltd.)
c) Stearic acid (manufactured by NOF Corp.)
d) Carbon black: "SEAST SO" (manufactured by Tokai Carbon Co., Ltd.)
e) Antiaging agent: "NOCRAC 6C" (manufactured by Ouchi Shinko Chemical Industrial Co., Ltd.)
f) Aroma oil: "PROCESS X-140" (manufactured by Japan Energy Corp.)
g) Sulfur: 5%-Sulfur-treated sulfur
h) Vulcanization promoters

(A) Sulfenamide type vulcanization promoter: N-cyclohexyl-2-benzothiazolesulfenamide: "NOCCELER CZ", manufactured by Ouchi Shinko Chemical Industrial Co., Ltd.
(B) Thiuram compound: Tetramethylthiuram monosulfide: "NOCCELER TT", manufactured by Ouchi Shinko Chemical Industrial Co., Ltd.

i) Bismaleimide compounds

(A) 4,4'-Diphenylmethanebismaleimide: "BMI-HS" (manufactured by K.I Chemical Industry Co., Ltd.)
(B) N,N'-phenylenebismaleimide: "VULNOC PM-P" (manufactured by Ouchi Shinko Chemical Industrial Co., Ltd.)

(Evaluations)

A predetermined mold was used to heat and vulcanize each of the rubber compositions at 170°C for 20 minutes. The resultant rubber was evaluated.

<Dynamic Magnification>

(Static Spring Constant (Ks))

While each of the rubber compositions was vulcanized and press-formed, a vulcanized rubber sample was produced which had a columnar shape (diameter: 50 mm, and height: 25 mm), and then an adhesive was used to bond a pair of columnar metallic tools (diameter: 60 mm, and thickness: 6 mm), respectively, onto the upper and lower surfaces of the vulcanized rubber sample. In this way, a test piece was produced. The produced test piece was compressed by 7 mm two times into the columnar axis direction. Thereafter, when a strain thereof was being restored, the deflection load of the test piece at 1.5 mm and that at 3.5 mm were measured from the resultant load-deflection curve thereof . From these values, the static spring constant (Ks) (N/mm) was calculated out.

(Dynamic Spring Constant (Kd))

The test piece used when the static spring constant (Ks) was measured was compressed by 2.5 mm into the columnar axis direction. From below the piece, a constant-displacement compressive harmonic vibration having an amplitude of 0.05 mm was applied at a frequency of 100 Hz to the piece around the position of the piece where the piece had been compressed by 2.5 mm, which was the center of the vibration. Using the upper load cell, the dynamic load was detected, and then in accordance with JIS-K 6394, the dynamic spring constant (Kd) (N/mm) of the piece was calculated out.

(Dynamic Magnification: Kd/Ks)

The dynamic magnification of the test piece was calculated out in accordance with the following expression:

$$\text{"Dynamic magnification"} = \text{"dynamic spring constant (Kd)"}/\text{"Static spring constant (Ks)"}$$

On the basis of the calculated dynamic spring constant and static spring constant, the dynamic magnification was calculated. The target value of the dynamic magnification was set to 2.0 or less. When the test piece attained this target value, the piece was estimated to be good (circular mark); or when the test piece did not attain this target value, the piece was estimated to be bad (cross mark). The estimation results are shown in Table 1.

<Heat Resistance>

A sample of each of the examples that was produced by using a JIS No. 3 dumbbell was allowed to stand still in an oven of 100°C temperature for 72 hours to be aged. The sample was taken out, and then cooled to room temperature. On the basis of JIS K 6251, the elongation at break (EB (%)) of the sample was measured. The retention proportion (%) of the elongation at break to the breaking elongation before the thermal aging was calculated out. As a sample is larger in retention proportion, the sample is better in heat resistance. The target value of the retention proportion was set to 70(%) or more. When the sample attained this target value, the sample was estimated to be good (circular mark) ; or when the sample did not attain this target value, the sample was estimated to be bad (cross mark) . The estimation results are shown in Table 1.

[0029]

[Table 1]

| | | Comparative Example 1 | Comparative Example 2 | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|---|
| Blend | Carbon black | 50 | 50 | 50 | 50 | 50 | 50 | 50 | 50 | 50 | 50 | 50 | 50 | 50 | 50 | 50 |
| | Aroma oil | 10 | 10 | 10 | 10 | 10 | 10 | 10 | 10 | 10 | 10 | 10 | 10 | 10 | 10 | 10 |
| | Stearic acid | 1 | 1 | 1 | 1 | 1 | 1 | 1 | 1 | 1 | 1 | 1 | 1 | 1 | 1 | 1 |
| | Antiaging agent | 1 | 1 | 1 | 1 | 1 | 1 | 1 | 1 | 1 | 1 | 1 | 1 | 1 | 1 | 1 |
| | Vulcanization promoter A | 3 | 3 | 3 | 3 | 3 | 3 | 3 | 3 | 3 | 3 | 3 | 3 | 3 | 3 | 3 |
| | Vulcanization promoter B | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | | | | | | | | | | | | | | | | |
| | NR | 80 | 80 | 80 | 80 | 80 | 80 | 80 | 80 | 100 | 80 | 80 | | | 80 | 80 |
| | IR | | | | | | | | | | | | 100 | 80 | | |
| | BR | 20 | 20 | 20 | 20 | 20 | 20 | 20 | 20 | | | 10 | | 20 | 20 | 20 |
| | SBR | | | | | | | | | | 20 | 10 | | | | |
| | Zinc oxide | 10 | 10 | | | | | | | | | | | | | |
| | Complex Zinc flower | | | 10 | 10 | 10 | 3 | 30 | 10 | 10 | 10 | 10 | 10 | 10 | 10 | 10 |
| | Bismaleimide compound A | | 1 | 1 | 1 | 1 | 1 | 1 | | 1 | 1 | 1 | 1 | 1 | 1 | 1 |
| | Bismaleimide compound B | | | | | | | | 1 | | | | | | | |
| | Sulfur | 1.5 | 1.5 | 1.5 | 0.1 | 3 | 1.5 | 1.5 | 1.5 | 1.5 | 1.5 | 1.5 | 1.5 | 1.5 | 1 | 0.5 |
| Evaluations | Kd/Ks ratio | 1.87 | 1.90 | 1.73 | 1.98 | 1.55 | 1.82 | 1.68 | 1.74 | 1.81 | 1.88 | 1.86 | 1.80 | 1.89 | 1.83 | 1.91 |
| | target value < 2.0 | ○ | ○ | ○ | ○ | ○ | ○ | ○ | ○ | ○ | ○ | ○ | ○ | ○ | ○ | ○ |
| | Heat resistance (%) | 63 | 68 | 78 | 92 | 71 | 74 | 80 | 75 | 79 | 76 | 77 | 78 | 77 | 84 | 88 |
| | Target value > 70 | × | × | ○ | ○ | ○ | ○ | ○ | ○ | ○ | ○ | ○ | ○ | ○ | ○ | ○ |

## Claims

1. A rubber composition for vibration-damping rubber, comprising a rubber component comprising at least one or more diene-based rubbers, a complex zinc flower, and a bismaleimide compound.

2. The rubber composition for vibration-damping rubber according to claim 1, comprising 2 to 40 parts by weight of the complex zinc flower, and 0.5 to 5 parts by weight of the bismaleimide compound for 100 parts by weight of the rubber component.

3. The rubber composition for vibration-damping rubbers according to claim 1 or 2, further comprising sulfur.

4. The rubber composition for vibration-damping rubber according to any one of claims 1 to 3, comprising 0.05 to 1 part by weight of sulfur for 100 parts by weight of the rubber component.

**INTERNATIONAL SEARCH REPORT**

International application No.
PCT/JP2016/080954

A. CLASSIFICATION OF SUBJECT MATTER
*C08L7/00*(2006.01)i, *C08L9/00*(2006.01)i, *C08K3/06*(2006.01)i, *C08K3/22*(2006.01)i, *C08K5/3415*(2006.01)i, *F16F15/08*(2006.01)i

According to International Patent Classification (IPC) or to both national classification and IPC

B. FIELDS SEARCHED

Minimum documentation searched (classification system followed by classification symbols)
C08L1/00-101/16, C08K3/00-13/08, F16F1/00-15/36, C09K3/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| Y | JP 2010-106202 A (Toyo Tire and Rubber Co., Ltd.), 13 May 2010 (13.05.2010), claims; examples (paragraph [0043]) (Family: none) | 1-4 |
| Y | JP 2010-95682 A (Toyo Tire and Rubber Co., Ltd.), 30 April 2010 (30.04.2010), claims; examples (paragraph [0073]) (Family: none) | 1-4 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 January 2017 (13.01.17) | 24 January 2017 (24.01.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No. PCT/JP2016/080954

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2013-10953 A (Bridgestone Corp.), 17 January 2013 (17.01.2013), claims; examples (paragraph [0044]) & US 2014/0080979 A1 claims; paragraphs [0059] to [0060] & WO 2012/165561 A1 & EP 2716699 A1 | 1-4 |
| Y | JP 2014-105236 A (Toyo Tire and Rubber Co., Ltd.), 09 June 2014 (09.06.2014), claims; examples (paragraph [0033]) (Family: none) | 1-4 |
| Y | JP 2009-40902 A (Bridgestone Corp.), 26 February 2009 (26.02.2009), claims; paragraph [0016]; examples (paragraph [0029]); paragraph [0034] (Family: none) | 1-4 |
| Y | JP 2001-316527 A (Bridgestone Corp.), 16 November 2001 (16.11.2001), claims; examples (paragraph [0048]; table 1, footnote) (Family: none) | 1-4 |
| A | JP 2014-77050 A (Toyo Tire and Rubber Co., Ltd.), 01 May 2014 (01.05.2014), claims (Family: none) | 1-4 |
| A | JP 2012-153834 A (Shinoda Rubber Co., Ltd.), 16 August 2012 (16.08.2012), paragraph [0028] (Family: none) | 1-4 |
| P,A | WO 2016/120991 A1 (Toyo Tire and Rubber Co., Ltd.), 04 August 2016 (04.08.2016), claims (Family: none) | 1-4 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006193621 A
- JP 2014077050 A